# FASCICULE DE BREVET EUROPEEN

(11) **EP 1 768 900 B1**
(45) Date de publication et mention de la délivrance du brevet: **07.11.2007**
(21) Numéro de dépôt: 05783791.6
(22) Date de dépôt: 27.06.2005
(51) Int. Cl.: B64C 13/04, B64C 13/46, G05G 5/08, G05G 7/04, G09B 9/28

(54) **DISPOSITIF DE COMMANDE A DISTANCE DE GOUVERNES D'UN AERONEF**
VERFAHREN ZUR FERNSTEUERUNG VON FLUGZEUGSTEUERFLÄCHEN
DEVICE FOR REMOTE CONTROL OF AN AIRCRAFT CONTROL SURFACES

(30) Priorité: 29.06.2004 FR 0407167
(43) Date de publication de la demande: 04.04.2007
(73) Titulaire: Sagem Défense Sécurité, 75015 Paris (FR)
(72) Inventeur: HORS, Daniel, F-92800 Puteaux (FR); JONCOUR, Yvon, F-95520 Osny (FR)
(74) Mandataire: Gorrée, Jean-Michel
(86) Numéro de dépôt international: PCT/FR2005/001620
(87) Numéro de publication internationale: WO 2006/010841

(56) Documents cités:
- EP-A- 0 659 640
- US-A- 2 394 384
- US-A- 2 695 145
- US-A- 4 069 720
- US-A- 5 513 543

## Description

La présente invention concerne le domaine de la commande à distance de gouvernes d'un aéronef, tel qu'avion, hélicoptère, ..., et elle concerne plus spécifiquement des perfectionnements apportés à de tels dispositifs, couramment dénommés manche à balai, prévus pour la commande des gouvernes de gauchissement (roulis) et/ou de profondeur (tangage) ; elle concerne encore plus spécifiquement des perfectionnements s'appliquant plus particulièrement, bien que non exclusivement, à des dispositifs dont le manche est de petite dimension (minimanche) et est associé structurellement à un accoudoir de manière à pouvoir être actionné avec le bras reposant sur l'accoudoir, par simple mouvement du poignet seul.

Un dispositif de commande du type concerné par l'invention comprend un organe d'actionnement (poignée, pédale) propre à pivoter autour d'un axe due part et d'autre d'une position neutre et à commander une modification de la voilure de l'aéronef en gauchissement et/ou en profondeur, et à cet effet il peut pivoter autour de deux axes en principe perpendiculaires (montage du type Cardan). Les systèmes de commande de type mécanique ou hydraulique génèrent de façon structurellement intrinsèque des efforts résistants qui sont perçus par le pilote lorsqu'il déplace le manche. Par contre, dans des systèmes de commande électriques ou électroniques, il n'existe aucun effort antagoniste généré naturellement et il est nécessaire d'adjoindre un dispositif annexe, associé à la commande principale, propre à générer un effort résistant, perceptible par l'utilisateur, en fonction du déplacement angulaire de l'organe d'actionnement.

Dans certains cas, il est nécessaire de prévoir un effort résistant qui diffère d'intensité en fonction de la position de l'organe d'actionnement ; par exemple, il peut être souhaité un effort résistant proportionnel à l'écart angulaire de l'organe d'actionnement sur la plus grande partie de la course de celui-ci, mais avec un effort résistant plus élevé au voisinage de la fin de course de manière que le pilote "sente" l'approche de la fin de course. Une telle commande à effort résistant variable par paliers peut trouver une application en particulier pour la commande des gouvernes de profondeur. On peut aussi souhaiter avoir, en outre, des efforts inégaux selon le sens de déplacement de l'organe d'actionnement.

Le document US 2 695 145 montre un dispositif selon le préambule de la revendication 1.

L'invention a pour objet de proposer un dispositif perfectionné qui soit mieux adapté, et notamment plus compact, que les dispositifs actuels à des courbes de réponse diverses et/ou asymétriques, ces perfectionnements pouvant trouver une application préférée bien que non exclusive dans les minimanches de pilotage, et en particulier pour la commande des gouvernes de profondeur.

A ces fins, l'invention propose un dispositif de commande à distance de gouvernes d'un aéronef, ledit dispositif comprenant un organe d'actionnement propre à pivoter autour d'un axe en entraînant un arbre rotatif coaxial à cet axe, qui, étant agencé selon l'invention, se caractérise en ce qu'il comprend :
- un premier doigt, fixe, parallèle audit arbre et supporté à distance radiale dudit arbre,
- un second doigt solidaire dudit arbre rotatif et parallèle à celui-ci et supporté à distance radiale de celui-ci,
- un premier plateau supporté à distance radiale dudit arbre en s'étendant latéralement aux deux doigts d'un côté de ceux-ci et de manière à pouvoir tourner coaxialement à l'arbre,
- un deuxième plateau supporté à distance radiale dudit arbre en s'étendant latéralement aux deux doigts du côté de ceux-ci opposé au premier plateau et de manière à pouvoir tourner coaxialement à l'arbre,
- au moins un troisième plateau supporté à distance radiale dudit arbre en s'étendant latéralement au deuxième plateau et à distance angulaire de celui-ci et de manière à pouvoir tourner coaxialement à l'arbre,
- un premier ressort interposé entre les premier et deuxième plateaux, et
- un second ressort interposé entre les premier et troisième plateaux.

Grâce à cet agencement, le dispositif peut occuper plusieurs positions fonctionnelles, à savoir :
- une position neutre occupée en l'absence d'effort exercé sur l'organe d'actionnement, pour laquelle le doigt mobile est aligné avec le doigt fixe, les premier et deuxième plateaux sont maintenus en appui latéralement contre les deux doigts alignés et de part et d'autre de ceux-ci sous l'action de précontrainte du premier ressort, et le troisième plateau est maintenu écarté du deuxième plateau, le second ressort n'étant pas précontraint,
- une position pivotée dans un premier sens à partir de la position neutre avec un angle variable, pour laquelle le second doigt mobile est entraîné, par rapport au premier doigt fixe, du côté du deuxième plateau en entraînant celui-ci et en étant soumis à l'effort de rappel du premier ressort interposé entre lesdits premier et deuxième plateaux, puis pivotée toujours dans le même sens avec un angle variable avec le deuxième plateau accolé au troisième plateau en entraînant celui-ci et en étant soumis à l'effort de rappel supplémentaire du second ressort, et
- une position pivotée dans un second sens, opposé au précédent, à partir de la position neutre avec un angle variable, pour laquelle le second doigt mobile est entraîné, par rapport au premier doigt fixe, du côté du premier plateau en entraînant celui-ci et en étant soumis à l'effort de rappel du premier ressort interposé entre les premier et deuxième plateaux, puis pivotée toujours dans le même sens avec un angle variable avec le troisième plateau accolé au deuxième plateau en étant soumis aux efforts de rappel cumulés des premier et second ressorts.

Ainsi, les dispositions conformes à l'invention permettent que l'opérateur ressente physiquement la venue de l'organe d'actionnement dans des positions angulaires prédéterminées, le nombre des seuils ainsi décelables pouvant du reste être quelconque en prévoyant un nombre approprié de plateaux rappelés par ressorts.

De façon pratique, il est avantageux, pour constituer un dispositif plus compact, que les deux ressorts soient des ressorts de torsion, notamment hélicoïdaux, disposés coaxialement autour de l'arbre. Toujours dans le but de réaliser un dispositif compact, il est intéressant que l'un des deux ressorts hélicoïdaux soit intérieur à l'autre.

Si l'on souhaite, sur la première plage de déplacement de l'organe d'actionnement, avoir un effort résistant asymétrique selon le sens de déplacement de l'organe d'actionnement, on peut prévoir que le premier ressort soit formé de deux ressorts en série, l'un étant interposé entre le doigt fixe et le premier plateau et l'autre étant interposé entre le doigt fixe et le deuxième plateau, et que les deux ressorts en série aient des raideurs respectives différentes.

Comme cela ressort de ce qui précède, les dispositions conformes à l'invention qui viennent d'être exposées trouvent une application intéressante dans le cas où l'organe d'actionnement est un manche ou poignée actionnable manuellement, tout particulièrement du type dit minimanche, et notamment lorsqu'il est fonctionnellement associé à la commande des gouvernes de profondeur.

La structure du dispositif conforme à l'invention offre également cet avantage supplémentaire d'autoriser, par une motorisation du doigt fixe, une fonction active de l'organe d'actionnement qui, en mode de pilotage automatique, peut suivre les évolutions de l'aéronef commandé par le calculateur ou par le pilote (cas de l'organe d'actionnement du co-pilote non utilisé). A cet effet, on prévoit que le dispositif comporte des moyens motorisés de déplacement fonctionnellement associés au doigt fixe et propres à modifier la position du doigt fixe.

L'invention sera mieux comprise à la lecture de la description détaillée qui suit de certains modes de réalisation préférés donnés uniquement à titre d'exemples nullement limitatifs. Dans cette description, on se réfère aux dessins annexés sur lesquels :
- la figure 1 est une représentation très schématique, en perspective, d'un dispositif agencé conformément à l'invention :

- la figure 2 est une vue de dessus du dispositif de la figure 1, montré dans une première position fonctionnelle ;
- les figures 2A et 2B sont des vues simplifiées analogues à celle de la figure 2, illustrant respectivement deux autres positions fonctionnelles obtenues pour deux déplacements de même sens de l'organe d'actionnement ;
- les figures 2C et 2D sont des vues simplifiées analogues à celle de la figure 2, illustrant respectivement encore deux autres positions fonctionnelles obtenues pour deux déplacements de même sens, opposé à celui des figures 2A, 2B, de l'organe d'actionnement ;
- la figure 3 est une vue analogue à celle de la figure 1 montrant une variante de réalisation motorisée ;
- les figures 4A et 4B sont des représentations graphiques de courbes de réponse susceptibles d'être obtenues avec diverses réalisations de dispositifs conformes à l'invention ;
- la figure 5 une vue de dessus, analogue à celle de la figure 2, montrant une variante de réalisation possible du dispositif de l'invention ; et
- la figure 6 est une représentation graphique de la courbe de réponse susceptible d'être obtenue avec le dispositif de la figure 5.

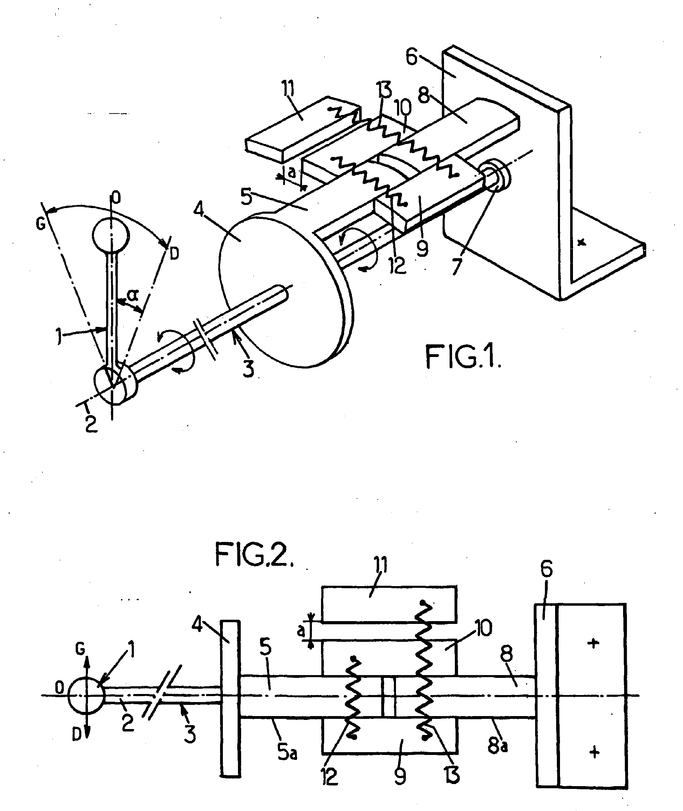

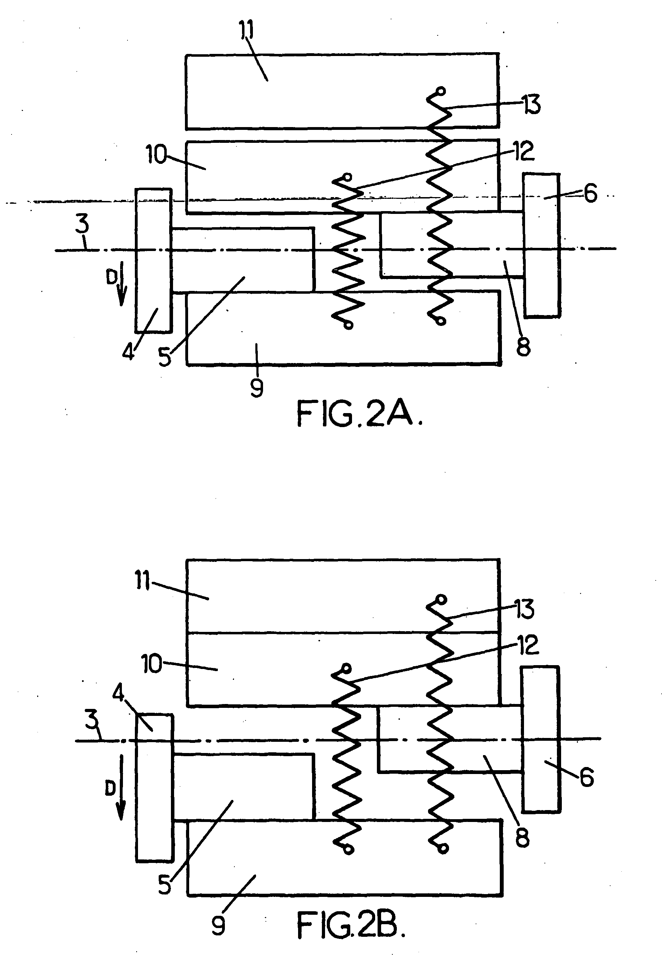

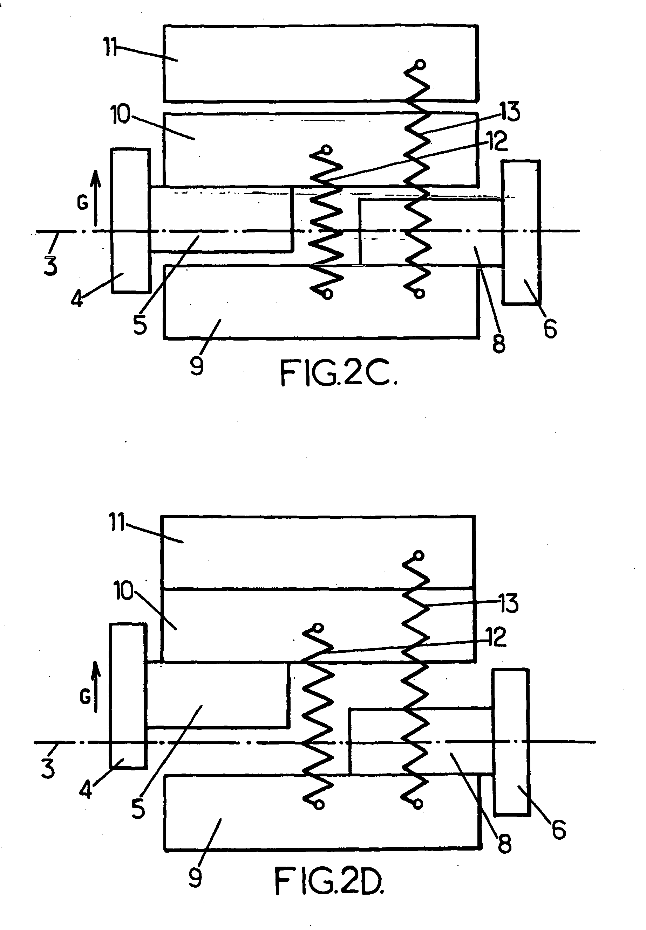

Sur les figures 1 et 2 auxquelles on se reporte tout d'abord, il est représenté très schématiquement les éléments constitutifs d'une structure de base d'un dispositif de commande à distance agencé conformément à l'invention. Il doit cependant être précisé ici que la partie de commande à distance proprement dite n'entre pas dans le champ de l'invention et n'a donc pas été illustrée, et que seuls ont été illustrés les éléments ou parties concernés par l'invention, à savoir les éléments ou parties propres à une restitution d'effort lorsque l'opérateur (le pilote de l'aéronef) déplace angulairement le manche de pilotage pour agir sur le gauchissement de la voilure de l'aéronef dans l'hypothèse où cette commande ne présente pas d'effort antagoniste propre (cas d'une commande électrique par exemple).

Dans ces conditions, le pilote a à sa disposition un manche de pilotage 1, qui, dans une application préférée de l'invention, est du type "minimanche" actionnable alors que l'avant-bras du pilote repose sur un accoudoir (non montré) au voisinage immédiat duquel ou dans lequel est monté le manche 1. Le manche 1 est mobile en rotation autour d'un axe 2 en entraînant un arbre 3 coaxial audit axe 2. L'arbre 3 commande à distance, de toute façon appropriée connue de l'homme du métier, le déplacement des éléments mobiles de profondeur de la voilure. Le même arbre 3, ou un autre arbre qui en est dépendant en rotation (par exemple par un accouplement à engrenages), est solidaire d'un flasque 4 coaxial portant, par exemple à sa périphérie ou au voisinage de sa périphérie, un doigt d'entraînement 5 parallèle à l'arbre 3 et supporté à distance radiale de celui-ci.

Une partie fixe de bâti, représentée sous forme d'un flasque 6 fixe, supporte l'extrémité de l'arbre 3 dans un palier 7 et supporte également un doigt fixe 8 qui s'étend parallèlement à l'arbre 3. Dans le mode de réalisation préféré montré aux figures 1 et 2, le doigt 8 est situé en regard et dans le prolongement du doigt mobile 5 quand le dispositif est dans la position neutre illustrée à la figure 1 et dont il sera question plus loin.

Un premier plateau 9 est supporté à distance radiale dudit arbre 3 en étant situé latéralement aux deux doigts 5 et 8 d'un côté de ceux-ci et s'étend de manière à les chevaucher, et il est supporté en outre de manière à pouvoir tourner coaxialement à l'arbre 3. Dans la position illustrée à la figure 1, le plateau 9 a son bord tourné vers les bords en regard des deux doigts 5 et 8 qui est conformé pour contacter lesdits bords des doigts. Dans un mode de réalisation simple, les bords des deux doigts 5 et 8 qui sont tournés du côté du plateau 9 sont en alignement mutuel, de sorte que le bord correspondant du plateau 9 est un bord sensiblement droit. Le plateau 9 peut être supporté de toute manière souhaitable (glissières, bras rotatif articulé sur l'arbre 3, ...) de manière à pouvoir tourner autour de l'arbre 3 à distance de celui-ci.

Un deuxième plateau 10 est supporté à distance radiale dudit arbre 3 en s'étendant latéralement aux deux doigts 8, 5 du côté de ceux-ci opposé au premier plateau 9 et de manière à pouvoir tourner coaxialement à l'arbre 3. En pratique le deuxième plateau 10 peut être analogue au premier plateau 9, agencé et monté de la même manière que le premier plateau 9 de l'autre côté des doigts 5 et 8.

Un troisième plateau 11 est supporté à distance radiale dudit arbre 3 en étant disposé latéralement au deuxième plateau 10 à l'opposé des doigts 5, 8 et est, dans la position de repos illustrée à la figure 1, écarté du deuxième plateau d'une distance angulaire prédéterminée a. Le troisième plateau 11 est en outre supporté de manière à pouvoir tourner coaxialement à l'arbre 3.

Un premier ressort 12 de rappel est fixé aux premier et deuxième plateaux 9 et 10, et un second ressort 13 de rappel est fixé aux premier et troisième plateaux 9 et 11 (sur les figures 1 et 2, les deux ressort 12 et 13 de rappel ont été schématisés sous forme respectivement de deux ressorts hélicoïdaux d'étendue transversale).

En l'absence d'effort exercé sur le manche 1, le dispositif est dans la position de repos ou position neutre repérée par O et illustrée aux figures 1 et 2. Dans cette position, le premier ressort 12 est précontraint de sorte qu'il rappelle les premier et deuxième plateaux l'un vers l'autre, en les accolant contre les doigts 5 et 8 de part et d'autre de ceux-ci. Par contre, le second ressort 13 n'est pas précontraint, de sorte que le troisième plateau 11 reste écarté transversalement du deuxième plateau 10 d'une distance angulaire a.

Si le manche 1 est dévié par exemple vers la droite (D sur les figures 1, 2, 2A et 2B) d'un angle α inférieur à l'écart angulaire a précité, le doigt mobile 5 solidaire du flasque 4, lui-même solidaire de l'arbre 3, est déplacé transversalement à l'axe 2 ; il entraîne le premier plateau 9 et écarte celui-ci du doigt fixe 8 à l'encontre de l'effort de rappel du premier ressort 12 tandis que le deuxième plateau 10 est retenu au contact du doigt fixe 8 (figure 2A). Simultanément, le premier plateau 9 entraîne le troisième plateau 11 par l'intermédiaire du ressort 10, mais, en l'absence de précontrainte de ce dernier, l'entraînement du troisième plateau 11 s'effectue sans modification de l'écartement transversal entre les premier et troisième plateaux 9 et 11, comme visible à la figure 2A.

Par contre, le déplacement du premier plateau 9 se poursuivant sous l'action d'entraînement du doigt 5 (l'angle α devenant supérieur à l'écart a), le troisième plateau 11 finit par entrer en contact avec le deuxième plateau 10 et reste en butée contre celui-ci. A ce moment, le deuxième ressort 13 commence à être étiré et le déplacement du premier plateau 9 s'effectue à l'encontre des efforts de rappel cumulés des deux ressorts 12 et 13.

Si maintenant le manche 1 est dévié vers la gauche (G sur les figures 1, 2, 2C et 2D) d'un angle α inférieur à l'écart a, le doigt mobile 5 est déplacé par le flasque 4, sans entraîner le premier plateau 9 qui reste bloqué contre le doigt fixe 8, mais en entraînant le deuxième plateau 10 à l'encontre de l'effort de rappel du premier ressort 12 tant que l'amplitude du parcours du doigt 5 reste inférieure à a (figure 2C) ; à ce moment, le deuxième plateau 10 parvient au contact du troisième plateau 11, et ensuite (α>a) le doigt 5 entraîne l'ensemble des deuxième et troisième plateaux 10 et 11 à l'encontre des efforts de rappel cumulés des premier et second ressorts 12 et 13.

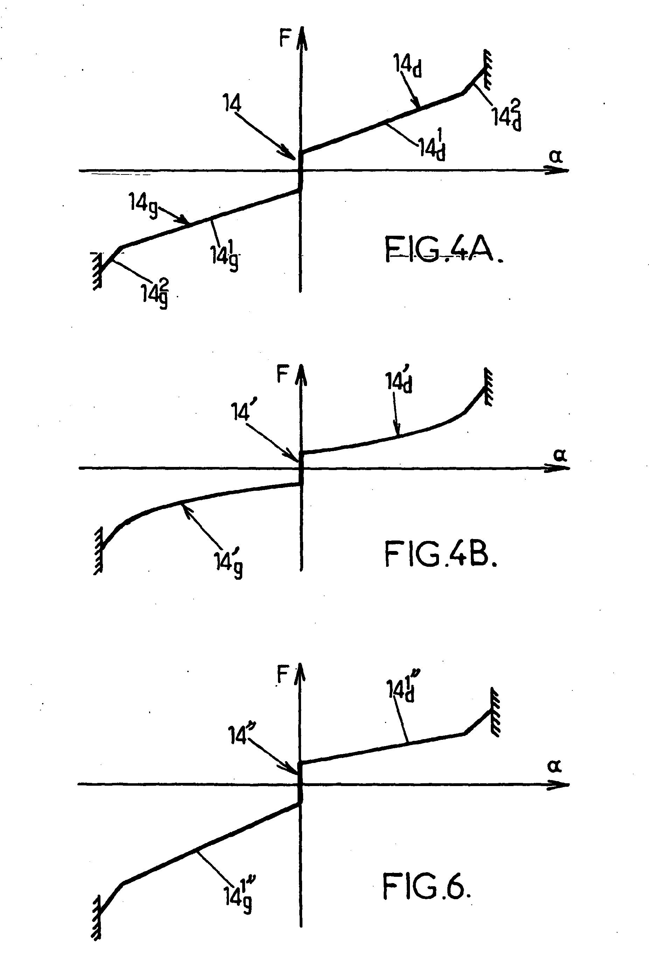

Finalement, la courbe de réponse 14 de cet agencement se présente comme illustré à la figure 4A (efforts portés en ordonnées et déplacements angulaires α du manche 1 portés en abscisse). Cette courbe de réponse 14 est symétrique par rapport à l'origine O et chaque demi-courbe 14_{d} et 14_{g} présente deux tronçons de droite 14¹ et 14² de pentes différentes correspondant respectivement à l'effort de rappel du premier ressort 10 seul et aux efforts de rappel cumulés des premier et second ressorts 11 et 13.

Sur les figures 2A à 2D (ainsi que plus loin sur la figure 5), on a assimilé les déplacements angulaires du doigt mobile 5 et des plateaux 9 à 11 à des déplacements linéaires.

Une application tout particulièrement, bien que non exclusivement, visée pour le dispositif conforme à l'invention tel qu'il vient d'être décrit concerne la commande de profondeur de la voilure d'un aéronef à l'aide d'un manche du type dit "minimanche", cette commande étant obtenue en déplaçant le minimanche angulairement dans un plan approximativement vertical sensiblement transversal à l'axe 2, c'est-à-dire de la gauche vers la droite ou inversement sur les figures 1 et 2. Dans le cas d'un minimanche, l'avant-bras reposant sur un accoudoir, les mouvements de rotation précités du minimanche sont obtenus par des déplacements du poignet de l'avant vers l'arrière ou inversement.

On comprend que l'agencement conforme à l'invention offre la possibilité de procurer des courbes de réponse de toute forme souhaitable, c'est-à-dire non seulement des courbes de réponse à tronçons rectilignes comme montré à la figure 4A, mais aussi, si cela est désiré pour des applications spécifiques, des courbes de réponse à tronçons multiples en augmentant le nombre des plateaux au-delà du troisième plateau 11, voire des courbes de réponse au moins en partie à variations curvilignes comme montré à la figure 4C avec la courbe de réponse 14' dont chaque demi-courbe 14_{d}' et 14_{g}' comporte une portion courbe suivie d'un tronçon rectiligne ou éventuellement lui aussi courbe. L'homme du métier connaît la manière d'obtenir de telles courbes de réponse par assemblage structurel de ressorts à raideurs différentes, par mise en oeuvre de ressorts à caractéristiques non constantes, ... .

Une courbe de réponse asymétrique peut être obtenue, si cela est souhaité, en rendant le dispositif des figures 1 et 2 asymétrique pour ce qui concerne l'effort de rappel développé par le premier ressort 12. A cette fin, comme illustré à la figure 5, le premier ressort 12 est décomposé en deux ressorts, à savoir un ressort 12a interposé entre le premier plateau 9 et le doigt fixe 8 et un ressort 12b interposé entre le deuxième plateau 10 et le doigt fixe 8, les deux ressorts 12a et 12b ayant des raideurs différentes. Le fonctionnement du dispositif reste analogue à ce qui a été exposé plus haut, à ceci près que l'effort résistant rencontré dans le déplacement du manche 1 diffère selon le sens du déplacement de part et d'autre de la position neutre O. La courbe de réponse 14" correspondante se présente alors comme montré à la figure 6, avec des tronçons 14_{g}¹" et 14_{d}¹" ayant des pentes différentes.

Dans une mise en oeuvre préférée de l'invention, les ressorts 12 et 13 sont réalisés sous forme de ressorts de torsion, avantageusement sous forme de ressorts hélicoïdaux entourant l'arbre 3 coaxialement à celui-ci. En outre, pour constituer un ensemble compact, il est intéressant de faire en sorte qu'un des ressorts hélicoïdaux soit intérieur à l'autre.

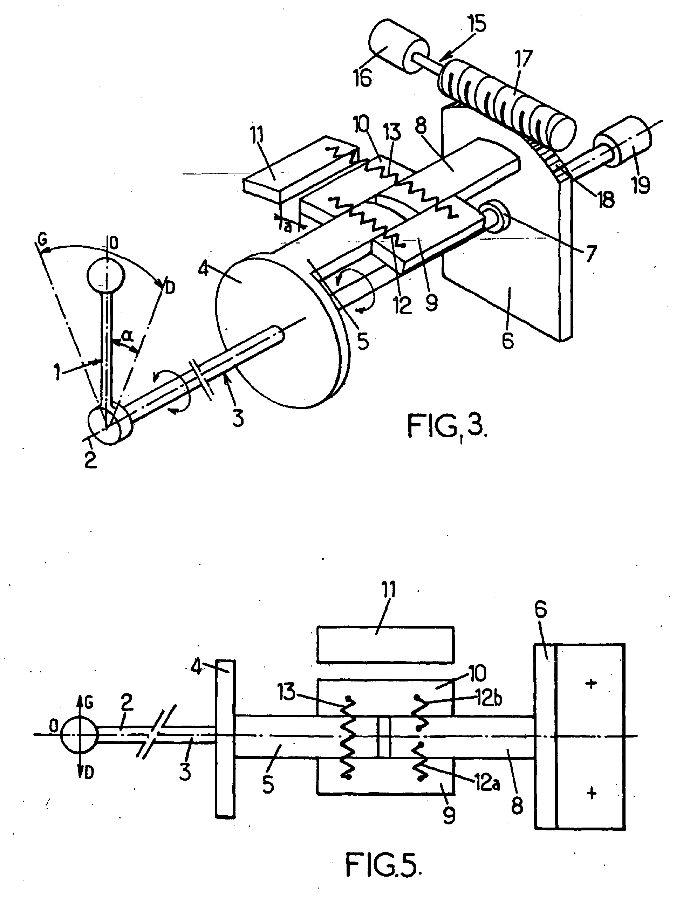

L'agencement qui vient d'être exposé du dispositif conforme à l'invention permet d'envisager une version motorisée qui soit sécurisante. Une motorisation directe de l'organe d'actionnement 1 ne pourrait pas s'avérer satisfaisante car elle devrait être en mesure de surmonter les efforts de précontrainte des ressorts et, par ailleurs, ne serait pas sécuritaire dans le cas d'une panne du moteur du type dit "embarquement" (le moteur fonctionne aléatoirement). Par contre une solution intéressante consiste à déplacer la référence de position neutre, autrement dit à motoriser le doigt 8 de référence en position. A cet effet, on peut envisager, comme illustré à la figure 3, de constituer le flasque 6 sous forme mobile, c'est-à-dire pivotant autour de l'arbre 3. Un exemple de réalisation peut consister, comme montré à la figure 3, à prévoir des moyens de déplacement 15 pour mouvoir le flasque 6, lesquels moyens de déplacement 15 peuvent comprendre un moteur 16 entraînant une vis sans fin 17 qui engrène avec un bord denté 18, arrondi coaxialement à l'arbre 3, du flasque 6 dont est solidaire le doigt 8. De façon souhaitable, un capteur 19 de position angulaire, fonctionnellement associé à l'arbre 3 (par exemple cale sur l'arbre 3), est inclus dans un circuit de recopie.

Un tel agencement à doigt 8 motorisé provoque, par déplacement de la référence de position, une activation de l'organe d'actionnement 1 et permet donc une fonction active dudit organe 1 qui, en mode de pilotage automatique (ou second manche non utilisé), pourrait suivre les évolutions de l'aéronef commandé par le calculateur ou le pilote (cas du manche co-pilote). Une telle structure est sécurisante car, en cas de panne du type "embarquement" (fonctionnement aléatoire du moteur), une reprise est possible à travers la loi d'effort des ressorts et le pilote peut contrer les mouvements intempestifs dus au moteur.

Il ressort clairement de la description précédente que, dans l'application préférée du dispositif conforme à l'invention, l'organe d'actionnement est un manche ou poignée 1 actionnable manuellement, notamment du type minimanche manoeuvrable par déplacement du poignet vers l'avant ou l'arrière à partir d'une position neutre centrale, pour la commande des gouvernes de profondeur de la voilure de l'aéronef. Bien entendu, un tel dispositif pourrait être utilisé pour d'autres commandes, par exemple pour la commande des gouvernes de gauchissement de la voilure d'un aéronef.

## Revendications

1. Dispositif de commande à distance de gouvernes d'un aéronef, ledit dispositif comprenant un organe d'actionnement (1) propre à pivoter autour d'un axe (2) en entraînant un arbre rotatif (3),
**caractérisé en ce qu'**il comprend :
- un premier doigt (8), fixe, parallèle audit arbre (3) et supporté à distance radiale dudit arbre (3),
- un second doigt (5) solidaire dudit arbre rotatif (3) et parallèle à celui-ci et supporté à distance radiale de celui-ci,
- un premier plateau (9) supporté à distance radiale dudit arbre (3) en s'étendant latéralement aux deux doigts (8, 5) d'un côté de ceux-ci et de manière à pouvoir tourner coaxialement à l'arbre (3),
- un deuxième plateau (10) supporté à distance radiale dudit arbre (3) en s'étendant latéralement aux deux doigts (8, 5) du côté de ceux-ci opposé au premier plateau (9) et de manière à pouvoir tourner coaxialement à l'arbre (3),
- au moins un troisième plateau (11) supporté à distance radiale dudit arbre (3) en s'étendant latéralement au deuxième plateau (10) et à distance angulaire (a) de celui-ci et de manière à pouvoir tourner coaxialement à l'arbre (3),
- un premier ressort (12) interposé entre les premier et deuxième plateaux (9, 10), et
- un second ressort (13) interposé entre les premier et troisième plateaux (9, 11),
ce grâce à quoi le dispositif peut occuper plusieurs positions fonctionnelles, à savoir :
- une position neutre (O) occupée en l'absence d'effort exercé sur l'organe d'actionnement (1), pour laquelle le doigt (5) mobile est aligné avec le doigt (8) fixe, les premier et deuxième plateaux (9, 10) sont maintenus en appui latéralement contre les deux doigts (8, 5) alignés et de part et d'autre de ceux-ci sous l'action du premier ressort (12), et le troisième plateau (11) est maintenu écarté du deuxième plateau (10), le second ressort (13) n'étant pas précontraint,
- une position pivotée dans un premier sens (G) à partir de la position neutre avec un angle (α<a) variable, pour laquelle le second doigt (5) mobile est entraîné, par rapport au premier doigt (8) fixe, du côté du deuxième plateau (10) en entraînant celui-ci et en étant soumis à l'effort de rappel du premier ressort (12) interposé entre lesdits premier et deuxième plateaux (9, 10), puis pivotée toujours dans le même sens avec un angle (α>a) variable avec le deuxième plateau (10) accolé au troisième plateau (11) en entraînant celui-ci et en étant soumis à l'effort de rappel supplémentaire du second ressort (13), et
- une position pivotée dans un second sens (D), opposé au précédent, à partir de la position neutre avec un angle (α<a) variable, pour laquelle le second doigt (5) mobile est entraîné, par rapport au premier doigt (8) fixe, du côté du premier plateau (9) en entraînant celui-ci et en étant soumis à l'effort de rappel du premier ressort (12) interposé entre les premier et deuxième plateaux (9, 10), puis pivotée toujours dans le même sens avec un angle (α>a) variable avec le troisième plateau (11) accolé au deuxième plateau (10) en étant soumis aux efforts de rappel cumulés des premier et second ressorts (12, 13).

2. Dispositif selon la revendication 1, **caractérisé en ce que** les deux ressorts (12, 13) sont des ressorts de torsion disposés coaxialement autour de l'arbre (3).

3. Dispositif selon la revendication 2, **caractérisé en ce que** les deux ressorts (12, 13) sont hélicoidaux.

4. Dispositif selon la revendication 3, **caractérisé en ce que** l'un des deux ressorts hélicoïdaux est intérieur à l'autre.

5. Dispositif selon l'une quelconque des revendications 1 à 4, **caractérisé en ce que** le premier ressort (12) est formé de deux ressorts (12a, 12b) en série, l'un (12a) étant interposé entre le doigt (8) fixe et le premier plateau (9) et l'autre (12b) étant interposé entre le doigt (8) fixe et le deuxième plateau (10), et **en ce que** les deux ressorts en série (12a, 12b) ont des raideurs respectives différentes, ce grâce à quoi l'effort antagoniste est différent selon le sens de déplacement de l'organe d'actionnement (1).

6. Dispositif selon l'une quelconque des revendications 1 à 5, **caractérisé en ce que** l'organe d'actionnement est un manche ou poignée (1) actionnable manuellement.

7. Dispositif selon la revendication 6, **caractérisé en ce que** l'organe d'actionnement (1) est du type dit minimanche.

8. Dispositif selon l'une quelconque des revendications 1 à 7, **caractérisé en ce qu'**il comporte des moyens motorisés de déplacement (15) fonctionnellement associés au doigt fixe (8) et propres à modifier la position du doigt fixe (8).

9. Dispositif selon l'une quelconque des revendications 1 à 8, **caractérisé en ce qu'**il est fonctionnellement associé à la commande des gouvernes de profondeur de la voilure de l'aéronef.

## Claims

1. A device for remotely controlling the control surfaces of an aircraft, said device comprising an actuator member (1) suitable for pivoting about one axis (2) to drive a rotary shaft (3),
**characterized in that** it comprises:
- a stationary, first finger (8) parallel to said shaft (3) and supported at a radial distance from said shaft (3);
- a second finger (5) secured to said rotary shaft (3) and parallel thereto and supported at a radial distance therefrom;
- a first slab (9) supported at a radial distance from said shaft (3) and extending beside the two fingers (8, 5) on one side thereof and in such a manner as to be able of turning coaxially to the shaft (3);
- a second slab (10) supported at a radial distance from said shaft (3) and extending beside the two fingers (8, 5) on the side thereof opposite from the first slab (9) and in such a manner as to be able of turning coaxially to the shaft (3);
- at least one third slab (11) supported at a radial distance from said shaft (3) and extending beside the second slab (10) and at an angular distance (a) therefrom, and in such a manner as to be able of turning coaxially to the shaft (3);
- a first spring (12) interposed between the first and second slabs (9, 10); and
- a second spring (13) interposed between the first and third slabs (9, 11);
whereby the device can occupy a several operational positions, namely:
- a neutral position (O) occupied in the absence of any force being exerted on the actuator member (1), in which the moving finger (5) is in alignment with the stationary finger (8), the first and second slabs (9, 10) are held resting laterally against the two fingers (8, 5) in alignment and on either side thereof under the action of the first spring (12), and the third slab (11) is held spaced apart from the second slab (10), the second spring (13) not being prestressed;
- a position pivoted in a first direction (G) from the neutral position through a variable angle (α<a) for which the moving, second finger (5) is driven relative to the stationary, first finger (8) in the direction of the second slab (10) while driving it and being subjected to the return force exerted by the first spring (12) interposed between said first and second slabs (9, 10), and then pivoted still in the same direction through a variable angle (α>a) with the second slab (10) resting on the third slab (11) while driving it, and being subjected to the additional return force exerted by the second spring (13); and
- a position pivoted in a second direction (D) opposite to the preceding one, away from the neutral position through a variable angle (α<a) in which the moving, second finger (5) is driven relative to the stationary, first finger (8) in the direction of the first slab (9) while driving it and being subjected to the return force of the first spring (12) interposed between the first and second slabs (9, 10), and then pivoted still in the same direction through a variable angle (α>a) with the third slab (11) resting on the second slab (10) while being subjected to the added return forces exerted by the first and second springs (12, 13).

2. The device according to claim 1, **characterized in that** both springs (12, 13) are torsion springs disposed coaxially about the shaft (3).

3. The device according to claim 2, **characterized in that** both springs (12, 13) are helical springs.

4. The device according to claim 3, **characterized in that** one of the two helical springs is inside the other one.

5. The device according to any one of claims 1 to 4, **characterized in that** the first spring (12) is made up of two springs (12a, 12b) in series, the one (12a) being interposed between the stationary finger (8) and the first slab (9), and the other one (12b) being interposed between the stationary finger (8) and the second slab (10), and **in that** the two springs (12a, 12b) in series have different respective stiffnesses, whereby the opposing force is different depending on the displacement direction of the actuator member (1).

6. The device according to any one of claims 1 to 5, **characterized in that** the actuator member is a manually-operable stick or knob (1).

7. The device according to claim 6, **characterized in that** the actuator member (1) is of the so-called mini-stick type.

8. The device according to any one of claims 1 to 7, **characterized in that** it includes motor-driven displacement means (15) operationally associated with the stationary finger (8) and suitable for modifying the position of the stationary finger (8).

9. The device according to any one of claims 1 to 8, **characterized in that** it is operationally associated with controlling the pitch-control surfaces of the wing of the aircraft.

## Patentansprüche

1. Vorrichtung zur Fernsteuerung von Flugzeugsteuerflächen, wobei diese Vorrichtung ein um eine Achse (2) schwenkbares Betätigungselement (1) umfasst, wobei eine Drehwelle (3) mitgenommen wird, **dadurch gekennzeichnet, dass** sie umfasst:
- einen ersten feststehenden Finger (8) parallel zu dieser Welle (3), der im Radialabstand zu dieser Welle (3) gehalten wird,
- einen zweiten Finger (5), der mit dieser Drehwelle (3) verbunden ist und parallel zu dieser und im Radialabstand zu dieser gehalten wird,
- eine erste Platte (9), die im Radialabstand von dieser Welle (3) gehalten wird und sich seitlich zu den zwei Fingern (8, 5) auf einer Seite derselbigen erstreckt und derart, dass eine koaxiale Drehung um die Welle (3) möglich ist,
- eine zweite Platte (10), die im Radialabstand von dieser Welle (3) gehalten wird und sich seitlich zu den zwei Fingern (8, 5) auf der Seite derselbigen erstreckt, die der ersten Platte (9) gegenüberliegt, und derart, dass eine koaxiale Drehung um die Welle (3) möglich ist,
- zumindest eine dritte Platte (11), die im Radialabstand von dieser Welle (3) gehalten wird und sich seitlich zur zweiten Platte (10) und im Winkelabstand (a) von derselbigen erstreckt und derart, dass eine koaxiale Drehung um die Welle (3) möglich ist,
- eine erste Feder (12), die zwischen der ersten und der zweiten Platte (9, 10) angeordnet ist, und
- eine zweite Feder (13), die zwischen der ersten und der dritten Platte (9, 11) angeordnet ist,
so dass die Vorrichtung deswegen in der Lage ist, mehrere Funktionspositionen einzunehmen, nämlich:
- eine Nullstellung (O), die bei Abwesenheit einer auf das Betätigungselement (1) ausgeübten Kraft belegt wird, für die der mobile Finger (5) nach dem feststehenden Finger (8) ausgerichtet ist, die erste und die zweite Platte (9, 10) in seitlicher Abstützung gegen die beiden ausgerichteten Finger (8, 5) unter der Einwirkung der ersten Feder (12) beidseitig von denselbigen gehalten werden und die dritte Platte (11) von der zweiten Platte (10) entfernt gehalten wird, wobei die zweite Feder (13) nicht vorgespannt ist,
- eine Schwenkstellung in eine erste Richtung (G) ab der Nullstellung mit einem variablem Winkel (α<a), für die der zweite mobile Finger (5) in Bezug zum ersten feststehenden Finger (8) an der Seite der zweiten Platte (10) mitgenommen wird und dieselbige mitnimmt, wobei sie der Rückstellkraft der ersten Feder (12) ausgesetzt ist, die zwischen dieser ersten und der zweiten Platte (9, 10) angeordnet ist, dann immer in dieselbe Richtung mit einem variablen Winkel (α>a) mit der zweiten Platte (10) schwenkt, die an der dritten Platte (11) anliegt und dieselbige mitnimmt, wobei sie der zusätzlichen Rückstellkraft der zweiten Feder (13) ausgesetzt ist, und
- eine Schwenkstellung in eine zweite Richtung (D) entgegengesetzt zur vorherigen Richtung ab der Nullstellung mit einem variablem Winkel (α<a), für die der zweite mobile Finger (5) in Bezug zum ersten feststehenden Finger (8) an der Seite der ersten Platte (9) mitgenommen wird und dieselbige mitnimmt, wobei sie der Rückstellkraft der ersten Feder (12) zwischen dieser ersten und der zweiten Platte (9, 10) ausgesetzt ist, dann immer in dieselbe Richtung mit einem variablen Winkel (α>a) mit der dritten Platte (11) schwenkt, die an der zweiten Platte (10) anliegt, wobei sie den kumulierten Rückstellkräften der ersten und zweiten Feder (12, 13) ausgesetzt ist.

2. Vorrichtung nach Anspruch 1, **dadurch gekennzeichnet, dass** die zwei Federn (12, 13) koaxial um die Welle (3) angeordnete Torsionsfedern sind.

3. Vorrichtung nach Anspruch 2, **dadurch gekennzeichnet, dass** die zwei Federn (12, 13) Spiralfedern sind.

4. Vorrichtung nach Anspruch 3, **dadurch gekennzeichnet, dass** eine der zwei Spiralfedern in der anderen angeordnet ist.

5. Vorrichtung nach einem der Ansprüche 1 bis 4, **dadurch gekennzeichnet, dass** die erste Feder (12) aus zwei Federn (12a, 12b) in Reihe gebildet wird, wobei die eine (12a) zwischen dem feststehenden Finger (8) und der ersten Platte (9) und die andere (12b) zwischen dem feststehenden Finger (8) und der zweiten Platte (10) angeordnet ist, und dadurch**,** dass die zwei Federn in Reihe (12a, 12b) jeweils unterschiedliche Steifigkeiten aufweisen, weswegen die antagonistische Kraft in Abhängigkeit von der Bewegungsrichtung des Betätigungselements (1) unterschiedlich ist.

6. Vorrichtung nach einem der Ansprüche 1 bis 5, **dadurch gekennzeichnet, dass** das Betätigungselement ein Knüppel oder Griff (1) ist, der manuell betätigbar ist.

7. Vorrichtung nach Anspruch 6, **dadurch gekennzeichnet, dass** das Betätigungselement (1) ein Miniknüppel ist.

8. Vorrichtung nach einem der Ansprüche 1 bis 7, **dadurch gekennzeichnet, dass** sie motorisierte Bewegungsmittel (15) umfasst, die funktional mit dem feststehenden Finger (8) verbunden sind und in der Lage, die Stellung des feststehenden Fingers (8) zu verändern.

9. Vorrichtung nach einem der Ansprüche 1 bis 8, **dadurch gekennzeichnet, dass** sie funktional mit der Steuerung der Tiefensteuerflächen des Tragwerks des Luftfahrzeugs verbunden ist.
